# EUROPÄISCHE PATENTSCHRIFT

(11) **EP 3 813 309 B1**
(45) Veröffentlichungstag und Bekanntmachung des Hinweises auf die Patenterteilung: **20.12.2023**
(21) Anmeldenummer: 20201901.4
(22) Anmeldetag: 14.10.2020
(51) Int. Cl.: H04L 12/403

(54) **VERFAHREN UND VORRICHTUNG ZUR EINSTELLUNG EINES BETRIEBSVERHALTENS MINDESTENS EINER FUNKTIONSEINHEIT UND SYSTEM**
METHOD AND DEVICE FOR ADJUSTING AN OPERATING BEHAVIOUR OF AT LEAST ONE FUNCTIONAL UNIT AND SYSTEM
PROCÉDÉ ET DISPOSITIF DE RÉGLAGE D'UN COMPORTEMENT DE FONCTIONNEMENT D'AU MOINS UNE UNITÉ FONCTIONNELLE ET SYSTÈME

(30) Priorität: 25.10.2019 DE 102019216519
(43) Veröffentlichungstag der Anmeldung: 28.04.2021
(73) Patentinhaber: VOLKSWAGEN AG, 38440 Wolfsburg (DE)
(72) Erfinder: Dürkop, Henning, 38110 Braunschweig (DE)

(56) Entgegenhaltungen:
- EP-A1- 3 547 277
- US-A1- 2003 086 102
- US-A1- 2004 080 322
- US-B2- 9 797 767

## Beschreibung

Die Erfindung betrifft ein Verfahren und eine Vorrichtung zur Einstellung eines Betriebsverhaltens mindestens einer Funktionseinheit in einem Fahrzeugkommunikationsnetzwerk und ein System, umfassend mindestens zwei solche Funktionseinheiten.

Aus dem Stand der Technik bekannt ist das Mess- und Kalibrierprotokoll XCP (extended Calibration Protocol). XCP ist in der Lage, auf Basis verschiedener Transportschichten dieselbe Protokollschicht zu nutzen. Somit handelt es sich um ein universelles Mess- und Kalibrierprotokoll, welches unabhängig vom verwendeten Netzwerktyp arbeiten kann. Als Transportschichten können beispielsweise CAN-basierte Transportschichten, Ethernet-basierte Transportschichten, USB-basierte Transportschichten, FlexRay-basierte Transportschichten oder andere Transportschichten verwendet werden. Das XCP nutzt ein Single-Master/Multi-Slave-Konzept und kann verschiedene Funktionen ausführen, u.a. eine DAQ- (Data Acquisition) Funktion und eine STIM- (Stimulation) Funktion.

Weiter ist es bekannt, das XCP zur Einstellung eines Betriebsverhaltens einer Funktionseinheit in einem Fahrzeugkommunikationsnetzwerk zu nutzen. So offenbart z.B. die DE 10 2017 202 347 A1, dass eine Veränderung eines Ausgangssignals einer Funktionseinheit durch eine Manipulation bzw. eine Veränderung mittels eines XCP-Protokolls erfolgen kann.

Die DE 10 2014 213 572 A1 offenbart, dass ein Fahrzeugsteuergerät über ein hinterlegtes Applikationsprotokoll verfügen kann, mittels dessen die Konfiguration eines Diagnosekommunikationsprotokolls über eine Kommunikationsschnittstelle erfolgen kann, wobei es sich bei dem Applikationsprotokoll beispielsweise um das XCP oder CCP handeln kann.

Die CN 107 231 314 A offenbart eine CAN-Kanalanpassungsmethode.

Die US 2004/080322 A1 offenbart die Kalibrierung von Schnittstellenvorrichtungen von Halbleitervorrichtungen unter Verwendung einer Kalibrierungsreferenz.

Weiter bekannt ist die Verwendung von sogenannten redundanten Funktionseinheiten, die zumindest teilweise gleiche Funktionen ausführen bzw. bereitstellen können. Somit kann beispielsweise bei Ausfall einer Funktionseinheit eine weitere Funktionseinheit die von der ausgefallenen Funktionseinheit bereitzustellenden Funktionen bereitstellen. Dies verbessert eine Betriebssicherheit des Fahrzeugs.

Im Rahmen der Einstellung des Betriebsverhaltens solcher Funktionseinheiten ist es bisher erforderlich, für jede der Funktionseinheiten einen Einstellbefehl zur Einstellung des entsprechenden Betriebsverhaltens zu erzeugen und an die jeweilige Funktionseinheit zu übertragen, wobei die Übertragung in der Regel über voneinander verschiedene Kanäle erfolgt. Dies kann beispielsweise vor der Inbetriebnahme des Fahrzeugs notwendig sein, aber auch bei Feldversuchen, in denen verschiedene Betriebsverhalten von Funktionseinheiten getestet werden, wobei die Einstellung dieser verschiedenen Betriebsverhalten zur Laufzeit, also beispielsweise während der Fahrt eines Fahrzeugs, erfolgt.

Durch die erläuterte separate Erzeugung und Übertragung der entsprechenden Einstellbefehle entsteht in der Regel eine unerwünschte Zeitverzögerung zwischen den Zeitpunkten, in denen das entsprechende Betriebsverhalten in mehreren Funktionseinheiten tatsächlich eingestellt ist.

Es ist daher wünschenswert, diese Zeitverzögerung zu verringern, um voneinander abweichende Betriebsverhalten von insbesondere redundanten Funktionseinheiten zu vermeiden.

Somit stellt sich das technische Problem, ein Verfahren und eine Vorrichtung zur Einstellung eines Betriebsverhaltens mindestens einer Funktionseinheit in einem Fahrzeugkommunikationsnetzwerk und ein System mit mindestens zwei solchen Funktionseinheiten zu schaffen, die eine verbesserte, insbesondere mit weniger Zeitverzögerung erfolgende, Einstellung der Betriebsverhalten von mindestens zwei Funktionseinheiten ermöglichen. Gleichzeitig soll mit dem Konzept, das dem Verfahren zugrunde liegt, aber auch die Einstellung eines Betriebsverhaltens genau einer Funktionseinheit ermöglicht werden.

Die Lösung des technischen Problems ergibt sich durch die Gegenstände mit den Merkmalen der unabhängigen Ansprüche. Weitere vorteilhafte Ausgestaltungen der Erfindung ergeben sich aus den Unteransprüchen.

Vorgeschlagen wird ein Verfahren zur Einstellung eines Betriebsverhaltens mindestens einer Funktionseinheit in einem Fahrzeugkommunikationsnetzwerk. Die Funktionseinheit kann hierbei eine fest im Fahrzeug verbaute Funktionseinheit sein. Insbesondere kann die Funktionseinheit eine Steuer- oder Regeleinrichtung des Fahrzeugs sein oder einen Teil einer solchen Steuer- oder Regeleinrichtung bilden. Eine Steuer- oder Regeleinrichtung kann auch als ECU (Electronic Control Unit) bezeichnet werden. Es ist vorstellbar, dass eine solche ECU genau eine Funktionseinheit bildet oder aber zwei oder mehr Funktionseinheiten umfasst.

Eine ECU kann beispielsweise ein Bremsensteuergerät, ein Lenkungssteuergerät, ein Fahrdynamik-Steuergerät oder ein weiteres Steuergerät im Fahrzeug sein.

Das Betriebsverhalten einer Funktionseinheit kann durch einen oder mehrere Betriebsparameter festgelegt sein. Diese können beispielsweise in der Funktionseinheit gespeichert oder von der Funktionseinheit aus einer entsprechenden Speichereinrichtung abrufbar sein. Solche Betriebsparameter können beispielsweise Parameter sein, auf die die Funktionseinheit bei der Ausführung bestimmter Funktionen zugreift, insbesondere um Signale zum Steuern oder Regeln zu erzeugen.

Eine Funktionseinheit kann hierbei ein Teilnehmer des Fahrzeugkommunikationsnetzwerks sein. Auch ist es möglich, dass die vorhergehend erläuterte ECU den Teilnehmer im Fahrzeugkommunikationsnetzwerk bildet.

Das Fahrzeugkommunikationsnetzwerk umfasst mindestens zwei Funktionseinheiten. Wie vorhergehend erläutert, können diese insbesondere zwei voneinander verschiedene ECU bilden oder Teil einer einzigen ECU sein.

Erfindungsgemäß wird mindestens ein Einstellbefehl an eine Master-Funktionseinheit übertragen, insbesondere über einen ersten Kommunikationskanal. Es ist aber auch möglich, dass der Einstellbefehl über einen weiteren Kommunikationskanal an die Master-Funktionseinheit übertragen wird, der vom ersten Kommunikationskanal verschieden ist. Hierbei bildet eine der vorhergehend erläuterten mindestens zwei Funktionseinheiten im Fahrzeugkommunikationsnetzwerk die Master-Funktionseinheit.

Für die Übertragung des Einstellbefehls kann ein gewünschtes Transportprotokoll, insbesondere ein CAN-Protokoll oder ein FlexRay-Protokoll oder ein weiteres, insbesondere eines der vorhergehend erläuterten, Transportprotokolle verwendet werden. Insbesondere kann die Master-Funktionseinheit oder ein die Master-Funktionseinheit umfassende ECU eine entsprechende Kommunikationsschnittstelle zum Empfangen des Einstellbefehls umfassen.

Ein Einstellbefehl kann hierbei einen Befehl bezeichnen, der zumindest einen Teil der Informationen kodiert, die zur Einstellung eines gewünschten Betriebsverhaltens benötigt werden. Der Einstellbefehl kann hierbei insbesondere von einem Nutzer oder einem übergeordneten System, beispielsweise einem Host-PC, erzeugt werden und von diesem an die Master-Funktionseinheit übertragen werden. Der Einstellbefehl kann insbesondere ein XCPbasierter Einstellbefehl sein. Dies kann bedeuten, dass der Einstellbefehl gemäß dem XCP an die Master-Funktionseinheit übertragen wird.

Weiter kann für die Übertragung des Einstellbefehls an die Master-Funktionseinheit mindestens eine erste Transportschicht genutzt werden.

Der Einstellbefehl kann hierbei insbesondere in einem Einstell- oder Kalibrationsvorgang an die Master-Funktionseinheit oder eine die Master-Funktionseinheit umfassende ECU übertragen werden. Der Einstellbefehl kann insbesondere ein Master-funktionseinheitsspezifischer Einstellbefehl sein. Dies kann bedeuten, dass der Einstellbefehl mindestens von der Master-Funktionseinheit interpretierbar und ausführbar ist.

Es ist möglich, dass ein Einstellbefehl an die mindestens eine weitere Funktionseinheit über einen weiteren Kommunikationskanal übertragbar ist oder übertragen wird. Der Einstellbefehl, der an die mindestens eine weitere Funktionseinheit übertragbar ist, kann ebenfalls ein funktionseinheitsspezifischer Einstellbefehl sein, wobei dieser mindestens von der weiteren Funktionseinheit interpretierbar und ausführbar ist.

Weiter wird durch die Master-Funktionseinheit mindestens der Einstellbefehl ausgewertet. Hierzu kann die Funktionseinheit eine Auswerteeinrichtung umfassen oder ausbilden. Die Auswerteeinrichtung kann insbesondere ein Mikrocontroller oder eine integrierte Schaltung sein oder eine(n) solche(n) umfassen.

Weiter wird durch die Auswertung ein MCCC- (Multi Channel Common Calibration) Betriebsmodus oder ein MCSC- (Multi Channel Single Calibration) Betriebsmodus bestimmt. In dem MCSC-Betriebsmodus wird durch die Master-Funktionseinheit das Betriebsverhalten von genau einer Funktionseinheit eingestellt. Diese eine Funktionseinheit kann insbesondere die Master-Funktionseinheit sein. In diesem Fall kann der übertragene Einstellbefehl durch die Master-Funktionseinheit ausgeführt werden. Alternativ ist es jedoch auch möglich, dass in dem MCSC-Betriebsmodus durch die Master-Funktionseinheit das Betriebsverhalten von genau einer Funktionseinheit eingestellt wird, die von der Master-Funktionseinheit verschieden ist.

Wird ein MCCC-Betriebsmodus bestimmt, so wird durch die Master-Funktionseinheit das Betriebsverhalten von mindestens zwei Funktionseinheiten eingestellt. Hierbei kann insbesondere das Betriebsverhalten der Master-Funktionseinheit und einer von der Master-Funktionseinheit verschiedenen Funktionseinheit eingestellt werden. Alternativ ist es jedoch auch möglich, dass durch die Master-Funktionseinheit das Betriebsverhalten von mindestens zwei Funktionseinheiten eingestellt wird, die jeweils von der Master-Funktionseinheit verschieden sind.

Hierbei kann durch die Auswertung insbesondere auch bestimmt werden, welche Funktionseinheiten einzustellen sind, wobei die derart bestimmten einzustellenden Funktionseinheiten solche Funktionseinheiten bezeichnen, deren Betriebsverhalten einzustellen ist. Mit anderen Worten kann/können also die einzustellende Funktionseinheit oder die einzustellenden Funktionseinheiten bestimmt werden, deren Betriebsverhalten einzustellen ist.

Zur Einstellung des Betriebsverhaltens einer von der Master-Funktionseinheit verschiedenen Funktionseinheit kann die Master-Funktionseinheit einen Einstellbefehl, insbesondere einen funktionseinheitsspezifischen Einstellbefehl, erzeugen und an diese Funktionseinheit übertragen. Die Übertragung kann hierbei über ein Funktionseinheit-Kommunikationsnetzwerk erfolgen. Dieses kann Teil des Fahrzeugkommunikationsnetzwerks sein. Allerdings kann dieses auch von dem Fahrzeugkommunikationsnetzwerk verschieden sein. Somit dient das Funktionseinheit-Kommunikationsnetzwerk, insbesondere ausschließlich, zur Übertragung von Daten bzw. Signalen zwischen Funktionseinheiten. Für die Übertragung dieses funktionseinheitsspezifischen Einstellbefehls kann insbesondere eine Transportschicht genutzt werden, die von der mindestens einen Transportschicht zur Übertragung des Einstellbefehls an die Master-Funktionseinheit verschieden ist.

Insbesondere kann das Funktionseinheit-Kommunikationsnetzwerk eine Kreuz- oder Querkommunikation zwischen der Master-Funktionseinheit und genau einer weiteren Funktionseinheit, gegebenenfalls aber auch mehreren weiteren Funktionseinheiten, ermöglichen. Über dieses Funktionseinheit-Kommunikationsnetzwerk kann eine Kommunikation im Duplex-Modus erfolgen, wobei insbesondere Sende- und Empfangssignale der Master-Funktionseinheit über verschiedene Kanäle und/oder Schnittstellen der Funktionseinheiten übertragen werden.

Sind die mindestens zwei Funktionseinheiten Teil einer ECU, so kann das Funktionseinheit-Kommunikationsnetzwerk ein ECU-internes Kommunikationsnetzwerk sein. Weiter ist es möglich, dass das Funktionseinheit-Kommunikationsnetzwerk eine CAN-basierte Übertragung von Signalen, insbesondere Befehlen, ermöglicht. Selbstverständlich können jedoch auch andere Protokolle zur Übertragung von Signalen zwischen Funktionseinheiten genutzt werden.

Das vorgeschlagene Verfahren ermöglicht in vorteilhafter Weise, dass für die Einstellung des Betriebsverhaltens mehrerer Funktionseinheiten nur noch ein einziger Einstellbefehl erzeugt und an eine Master-Funktionseinheit übertragen werden muss. Insbesondere ist es nicht notwendig, mehrere Einstellbefehle, beispielsweise ein Einstellbefehl pro Funktionseinheit, zu erzeugen und an die entsprechende Funktionseinheit zu übertragen. Hierdurch kann in vorteilhafter Weise eine Zeitverzögerung bei der Einstellung des Betriebsverhaltens reduziert werden, insbesondere da keine Mehrfacherzeugung des Einstellbefehls erforderlich ist.

Weiter kann durch die Erzeugung und Übertragung eines einzigen Befehls ein mehrkanaliger Einstellvorgang durchgeführt werden.

Durch die verringerte Zeitverzögerung ergibt sich in vorteilhafter Weise eine verbesserte Einstellung des Betriebsverhaltens von mehreren Funktionseinheiten.

In einer weiteren Ausführungsform sind die Funktionseinheiten redundante Funktionseinheiten. Dies kann insbesondere dann der Fall sein, wenn die Funktionseinheiten Teil einer gemeinsamen ECU sind. Redundante Funktionseinheiten bezeichnen hierbei - wie vorhergehend erläutert - Funktionseinheiten, die zumindest teilweise oder vollständig gleiche Funktionen bereitstellen können. So ist es beispielsweise vorstellbar, dass eine der redundanten Funktionseinheiten genau eine oder eine Menge von Funktionen bereitstellt, wobei eine weitere, redundante Funktionseinheit genau dieselbe(n) Funktion(en) oder eine Teilmenge davon bereitstellt. Hierdurch ergibt sich in vorteilhafter Weise eine einfache und zeitlich schnelle Einstellung eines gleichen Betriebsverhaltens derer Funktionseinheiten.

In einer weiteren Ausführungsform wird das Betriebsverhalten der Master-Funktionseinheit in Abhängigkeit des Einstellbefehls eingestellt, wenn diese als einzustellende Funktionseinheit bestimmt wurde. Dies kann insbesondere durch Interpretation und Ausführung des Einstellbefehls erfolgen. Beispielsweise kann bei der Ausführung des Einstellbefehls ein Betriebsparameter der Master-Funktionseinheit auf einen gewünschten Wert gesetzt werden, wobei dieser Wert vorbestimmt oder ebenfalls im Einstellbefehl kodiert sein kann.

Alternativ oder kumulativ kann durch die Master-Funktionseinheit ein funktionseinheitsspezifischer Einstellbefehl an alle einzustellenden Funktionseinheiten übertragen werden. Hierzu kann die Master-Funktionseinheit den entsprechenden funktionseinheitsspezifischen Einstellbefehl erzeugen. Beispielsweise kann die Master-Funktionseinheit beispielsweise den Einstellbefehl auswerten und dessen Inhalt oder Teile davon in dem neu zu erzeugenden funktionseinheitsspezifischen Einstellbefehl kodieren. Dies kann auch als Einstellbefehl-Umsetzung bezeichnet werden. Mit anderen Worten erfolgt bei der Erzeugung des funktionseinheitsspezifischen Einstellbefehls eine Signal- oder Datenverarbeitung durch die Master-Funktionseinheit.

Insbesondere kann die Master-Funktionseinheit den funktionseinheitsspezifischen Einstellbefehl erzeugen und über einen weiteren Kommunikationskanal an die mindestens eine weitere Funktionseinheit übertragen, wobei dieser Kommunikationskanal von dem vorhergehend erläuterten Kommunikationskanal verschieden ist. Mit anderen Worten kann also die Master-Funktionseinheit den entsprechenden Einstellbefehl über den vorhergehend erläuterten ersten Kommunikationskanal empfangen und einen Einstellbefehl an mindestens eine weitere Funktionseinheit über einen weiteren Kommunikationskanal übertragen. Somit wird aus Sicht der weiteren Funktionseinheit der Einstellbefehl über den entsprechenden funktionseinheitsspezifischen Kommunikationskanal, nämlich den weiteren Kommunikationskanal, übertragen.

Hierdurch ergibt sich in vorteilhafter Weise eine einfache und zuverlässige Einstellung des Betriebsverhaltens einer oder mehrerer Funktionseinheit(en) in einem mehrere Funktionseinheiten umfassenden Fahrzeugkommunikationsnetzwerk.

Weiter erfindungsgemäß erfolgt das Einstellen des Betriebsverhaltens durch Einstellung mindestens eines Betriebsparameters. Bei der Einstellung des Betriebsparameters wird ein im Einstellbefehl kodierter Wert an eine vorbestimmte Speicherstelle geschrieben, wobei dann die Funktionseinheit bei der Ausführung der entsprechenden Funktion den gespeicherten Wert abruft, beispielsweise um ein entsprechendes Ausgangssignal zu erzeugen. Der Wert kann beispielsweise eine Steigung einer Kennlinie kodieren. Auch kann der Wert einen Steuer- oder Regelparameter kodieren. Auch kann der Wert beispielsweise ein Verstärkungsfaktor sein. Hierdurch ergibt sich in vorteilhafter Weise ein einfache und zuverlässige Einstellung eines Betriebsverhaltens einer Funktionseinheit.

In einer weiteren Ausführungsform ist im Einstellbefehl mindestens ein Wert eines Betriebsparameters kodiert, wobei in Abhängigkeit dieses Werts der MCCC-Betriebsmodus oder der MCSC-Betriebsmodus identifiziert wird. In dieser Ausführungsform kann der Betriebsparameter ein Betriebsmodus-Parameter sein. Beispielsweise kann der MCCC-Betriebsmodus identifiziert werden, falls der Wert einem vorbestimmten Wert entspricht oder in einem vorbestimmten Wertebereich liegt. Entsprechend kann auch der MCSC-Betriebsmodus identifiziert werden. Mit anderen Worten kann der im Einstellbefehl kodierte Inhalt genutzt werden, um den Betriebsmodus zu identifizieren. Hierdurch ergibt sich in vorteilhafter Weise eine zuverlässige Identifizierung des entsprechenden Betriebsmodus und somit auch eine zuverlässige Durchführung des vorgeschlagenen Verfahrens.

Alternativ oder kumulativ ist im Einstellbefehl mindestens ein Speicherbereich für einen Wert kodiert. Der Wert kann hierbei ebenfalls im Einstellbefehl kodiert sein und z.B. der Wert eines Betriebsparameter sein, der in dem Speicherbereich gespeichert werden soll. Alternativ kann der Wert ein vorbestimmter Wert sein. Weiter wird in Abhängigkeit des Speicherbereichs der MCCC-Betriebsmodus oder der MCSM-Betriebsmodus identifiziert. Beispielsweise kann der MCCC-Betriebsmodus identifiziert werden, falls der kodierte Speicherbereich einem vorbestimmten Speicherbereich entspricht oder in einer vorbestimmten Menge von Speicherbereichen liegt. Entsprechend kann auch der MCSM-Betriebsmodus identifiziert werden. Auch hierdurch ergibt sich eine zuverlässige Identifizierung des Betriebsmodus und somit eine zuverlässige Einstellung des Betriebsverhaltens einer oder mehrerer Funktionseinheiten.

Weiter alternativ oder kumulativ wird der MCCC-Betriebsmodus oder der MCSC-Betriebsmodus in Abhängigkeit eines Kommunikationskanals identifiziert, über den der Einstellbefehl übertragen wird. Wird beispielsweise identifiziert, dass der Einstellbefehl über einen Kommunikationskanal übertragen wird, der nicht dem Kommunikationskanal zur Übertragung von Befehlen an die Master-Funktionseinheit sondern an eine davon verschiedene Funktionseinheit dient, so kann der MCSM-Betriebsmodus identifiziert werden und das Betriebsverhalten dieser Funktionseinheit eingestellt werden.

In einer weiteren Ausführungsform werden durch die Master-Funktionseinheit zusätzlich zum Einstellbefehl auch weitere an die Master-Funktionseinheiten übertragene Befehle ausgewertet. Insbesondere können zeitlich vor dem Einstellbefehl und/oder zeitlich nach dem Einstellbefehl an die Master-Funktionseinheit übertragene Befehle ausgewertet werden. Diese weiteren Befehle können ebenfalls Einstellbefehle sein. So kann es erforderlich sein, dass an die Master-Funktionseinheit übertragene Befehle gespeichert werden, wobei die Master-Funktionseinheit zur Auswertung auf die gespeicherten Befehle zugreift. Insbesondere können zeitlich vor einem Einstellbefehl übertragene Befehle für die Auswertung gespeichert. Die Speicherung kann in einer Speichereinrichtung der Funktionseinheit oder einer die Funktionseinheit umfassenden ECU erfolgen.

Insbesondere kann durch die Auswertung zusätzlicher Befehle eine Kontextbewertung erfolgen, wobei sich aus dem derart bewerteten Kontext ergibt, ob das Betriebsverhalten genau einer oder aber mehrerer Funktionseinheit(en) eingestellt werden soll und gegebenenfalls auch welche Funktionseinheiten einzustellen sind.

Es ist z.B. möglich, dass durch den Einstellbefehl ein Schreib-Vorgang kodiert wird, wobei in einem weiteren Befehl der Wert und/oder der Speicherbereich zum Schreiben kodiert ist. Dann kann durch Auswertung dieser mehreren Befehle identifiziert werden, ob ein Betriebsparameter in einen Speicherbereich geschrieben werden soll.

Beispielsweise kann durch Auswertung des Speicherbereichs identifiziert werden, ob durch den Befehl ein Wert in einen bestimmten Speicherbereich geschrieben werden sollen. Hieraus kann sich ergeben, dass der Einstellbefehl zur Einstellung eines Betriebsverhaltens dient, z.B. wenn der Speicherbereich ein Speicherbereich für Betriebsparameter ist, oder ob der Einstellbefehl nicht zur Einstellung eines Betriebsverhaltens dient, z.B. wenn der Speicherbereich kein Speicherbereich für Betriebsparameter ist. Im ersten Fall kann dann insbesondere identifiziert werden, ob der einzustellende Betriebsparameter zur Ausführung von Funktionen durch mehrere Funktionseinheiten oder nur genau einer Funktionseinheit benötigt wird, wobei dann das Betriebsverhalten dieser Funktionseinheiten wie vorhergehend erläutert eingestellt wird.

Durch die Auswertung kann also auch die Anzahl der einzustellenden Funktionseinheiten identifiziert werden. In diesem Fall kann es erforderlich sein, dass der Einstellbefehl, der den Schreib-Vorgang kodiert, gespeichert wird, wobei dann zur Auswertung der Befehlssequenz aus dem den Schreib-Vorgang kodierenden Befehl und dem den Speicherbereich und/oder Wert kodierenden Befehl der entsprechende Betriebsmodus identifiziert wird.

Hierdurch ergibt sich ebenfalls in vorteilhafter Weise eine zuverlässige Bestimmung des Betriebsmodus.

In einer weiteren Ausführungsform wird durch die Master-Funktionseinheit ein funktionseinheitsspezifischer Einstellbefehl an alle einzustellenden Funktionseinheiten übertragen. Dies wurde vorhergehend bereits erläutert. Weiter erfolgt die Ausführung des Einstellbefehls in der Master-Funktionseinheit zeitverzögert zur Übertragung. Insbesondere kann die Ausführung des Einstellbefehls in der Master-Funktionseinheit mit einem vorbestimmten Zeitversatz erfolgen. Die Vorbestimmung dieses Zeitversatzes kann insbesondere in Abhängigkeit einer Dauer einer Befehlsübertragung zu der/den weiteren Funktionseinheit(en) erfolgen. Insbesondere kann die Zeitdauer derart bestimmt werden, dass sie gleich oder um ein vorbestimmtes Maß länger oder um ein vorbestimmtes Maß kürzer als die Zeitdauer der Signalübertragung, insbesondere der längsten Zeitdauer bei Übertragung an mehrere weitere Funktionseinheiten, entspricht.

Hierdurch kann in vorteilhafter Weise sichergestellt werden, dass eine möglichst zeitlich synchrone Einstellung des Betriebsverhaltens mehrerer Funktionseinheiten erfolgt. Wie vorhergehend erläutert, ist die zeitsynchrone Einstellung eines Betriebsverhaltens mehrerer Funktionseinheiten mit dem XCP gemäß dem Stand der Technik nur mit erheblichem Aufwand möglich. Hierbei spielt u.a. die Art des Transportmediums eine wichtige Rolle, beispielsweise ob eine synchrone Buskommunikation, wie z.B. bei einer FlexRay-basierten Übertragung, oder eine asynchrone Buskommunikation, wie z.B. bei einer CAN-basierten Übertragung, durchgeführt wird. In der vorgeschlagenen Ausführungsform kann durch die Master-Funktionseinheit die Befehlsübertragung gezielt derart verzögert werden, bis die Datenübertragung an die mindestens eine weitere Funktionseinheit abgeschlossen ist. In diesem Fall können dann beide Funktionseinheiten den Befehl, beispielsweise einen Schreibvorgang, gleichzeitig oder annähernd gleichzeitig ausführen.

In einer weiteren Ausführungsform wird das eingestellte Betriebsverhalten von mindestens zwei Funktionseinheiten mit gleich eingestelltem Betriebsverhalten verglichen. Das Vergleichen kann beispielsweise durch Abrufen und Vergleichen von allen oder ausgewählten, aber nicht allen, Betriebsparametern der Funktionseinheiten erfolgen. Dies kann beispielsweise durch die Master-Funktionseinheit durchgeführt werden. Weiter wird eine Fehleinstellung detektiert, falls die eingestellten Betriebsverhalten voneinander abweichen.

In diesem Fall kann ein Fehlersignal erzeugt werden, insbesondere ebenfalls durch die Master-Funktionseinheit. Dieses Fehlersignal kann an ein übergeordnetes System, insbesondere den vorhergehend erläuterten Host-PC, übertragen werden. Das übergeordnete System kann dann eine entsprechende Maßnahme zur Fehlerbehandlung, insbesondere zur Fehlerbehebung, durchführen. Alternativ oder kumulativ kann das Fehlersignal an einen Nutzer ausgegeben werden, beispielsweise in optisch erfassbarer, akustisch erfassbarer oder haptisch erfassbarer oder in einer anderen wahrnehmbaren Form.

Hierdurch ergibt sich in vorteilhafter Weise das Verbessern einer Betriebssicherheit, da unerwünscht voneinander abweichende Betriebsverhalten zuverlässig detektiert und gegebenenfalls auch zur Fehlerbehandlung gemeldet werden können.

In einer weiteren Ausführungsform wird bei Detektion einer Fehleinstellung der Vergleich nach einer vorbestimmten Zeitdauer erneut durchgeführt, wobei die Detektion der Fehleinstellung nur dann aufrechterhalten wird, falls die eingestellten Betriebsverhalten weiterhin voneinander abweichen. Beispielsweise kann das erläuterte Fehlersignal nur dann erzeugt werden, wenn die Detektion der Fehleinstellung aufrechterhalten wird.

Hierdurch kann in vorteilhafter Weise eine Robustheit der Einstellung des Betriebsverhaltens mehrerer Funktionseinheiten erhöht werden, da es unter Umständen tolerierbar ist, für eine gewisse Zeitdauer verschieden eingestellte Betriebsverhalten zu tolerieren. Dies kann insbesondere der Fall sein, falls die Unterschiede die Funktionsfähigkeit der Funktionseinheiten nicht mehr als ein vorbestimmtes Maß beeinträchtigen.

In einer weiteren Ausführungsform wird bei Detektion einer Fehleinstellung oder einer aufrechterhaltenen Detektion durch die Masterfunktionseinheit ein funktionseinheitsspezifischer Einstellbefehl an die mindestens eine weitere Funktionseinheit übertragen. Hierzu kann entsprechend den vorhergehend erläutertem Vorgehen dieser funktionseinheitsspezifische Einstellbefehl erzeugt werden. Insbesondere kann die Master-Funktionseinheit den funktionseinheitsspezifischen Einstellbefehl derart erzeugen, dass die Abweichung im Betriebsverhalten nach Übertragung und Ausführung durch die mindestens eine weitere Funktionseinheit aufgehoben ist. Dies kann insbesondere auch bei Detektion einer aufrechterhaltenen Fehleinstellung erfolgen. Hierdurch kann in vorteilhafter Weise eine Betriebssicherheit in einem System umfassend mindestens zwei Funktionseinheiten verbessert werden, da abweichende Betriebsverhalten zuverlässig aufgehoben werden.

Hierbei können werden durch den Einstellbefehl alle Betriebsparameter oder nur ausgewählte, insbesondere voneinander abweichende, Betriebsparameter an die mindestens eine weitere Funktionseinheit übertragen. Hierzu können die voneinander abweichenden Betriebsparameter identifiziert werden, beispielsweise durch die Master-Funktionseinheit. Dies ermöglicht in vorteilhafter Weise eine zeitlich schnelle Aufhebung voneinander abweichender Betriebsverhalten, wobei dann die Zeitdauer zum Abgleich der Betriebsverhalten durch die Übertragung nur ausgewählter Betriebsparameter reduziert wird.

Weiter vorgeschlagen wird eine Vorrichtung zur Einstellung eines Betriebsverhaltens mindestens einer Funktionseinheit in einem Fahrzeugkommunikationsnetzwerk. Die Vorrichtung kann hierbei derart ausgebildet sein, dass ein Verfahren gemäß einer der in dieser Offenbarung beschriebenen Ausführungsformen mit der Vorrichtung durchführbar ist. Die Vorrichtung kann insbesondere eine Funktionseinheit, weiter insbesondere die erläuterte Master-Funktionseinheit, sein. Auch kann die vorgeschlagene Vorrichtung durch eine ECU ausgebildet sein. Das Fahrzeugkommunikationsnetzwerk umfasst mindestens zwei Funktionseinheiten.

Weiter umfasst die Vorrichtung mindestens eine erste Kommunikationsschnittstelle zum Empfang eines Einstellbefehls, insbesondere über einen ersten Kommunikationskanal. Die Kommunikationsschnittstelle kann hierbei insbesondere eine Kommunikationsschnittstelle einer ECU sein.

Weiter umfasst die Vorrichtung mindestens eine Einrichtung zur Auswertung des mindestens einen Einstellbefehls. Weiter wird durch die Auswertung ein MCCC-Betriebsmodus oder ein MCSC-Betriebsmodus bestimmt, wobei in dem MCSC-Betriebsmodus durch die Vorrichtung das Betriebsverhalten von genau einer Funktionseinheit und in dem MCCC-Betriebsmodus durch die Vorrichtung das Betriebsverhalten von mindestens zwei Funktionseinheiten eingestellt wird. Dies und entsprechende Vorteile wurden vorhergehend erläutert.

Weiter beschrieben wird ein System, wobei das System mindestens zwei Funktionseinheiten umfasst. Weiter ist mindestens eine Funktionseinheit als die vorhergehend erläuterte Vorrichtung zur Einstellung eines Betriebsverhaltens mindestens einer Funktionseinheit in einem Fahrzeugkommunikationsnetzwerk ausgebildet. Das System kann hierbei insbesondere ein Kommunikationssystem sein.

Weiter beschrieben wird ein Fahrzeugkommunikationsnetzwerk zur Verbindung mehrerer Teilnehmer, insbesondere mehrerer Funktionseinheiten, in einem Fahrzeug. Ebenfalls beschrieben wird ein Fahrzeug mit einem solchen Fahrzeugkommunikationsnetzwerk bzw. einem System und/oder einer Vorrichtung zur Einstellung eines Betriebsverhaltens gemäß einer der in dieser Offenbarung erläuterten Ausführungsform.

Die Erfindung wird anhand von Ausführungsbeispielen näher erläutert. Die Figuren zeigen:
- Fig. 1: ein schematisches Blockschaltbild eines Systems mit zwei Funktionseinheiten gemäß dem Stand der Technik,
- Fig. 2: ein schematisches Blockschaltbild eines erfindungsgemäßen Systems in einem MCSC-Betriebsmodus,
- Fig. 3: ein schematisches Blockschaltbild eines erfindungsgemäßen Systems in einem MCCC-Betriebsmodus und
- Fig. 4: ein schematisches Flussdiagramm eines erfindungsgemäßen Verfahrens.

Nachfolgend bezeichnen gleiche Bezugszeichen Elemente mit gleichen oder ähnlichen technischen Merkmalen.

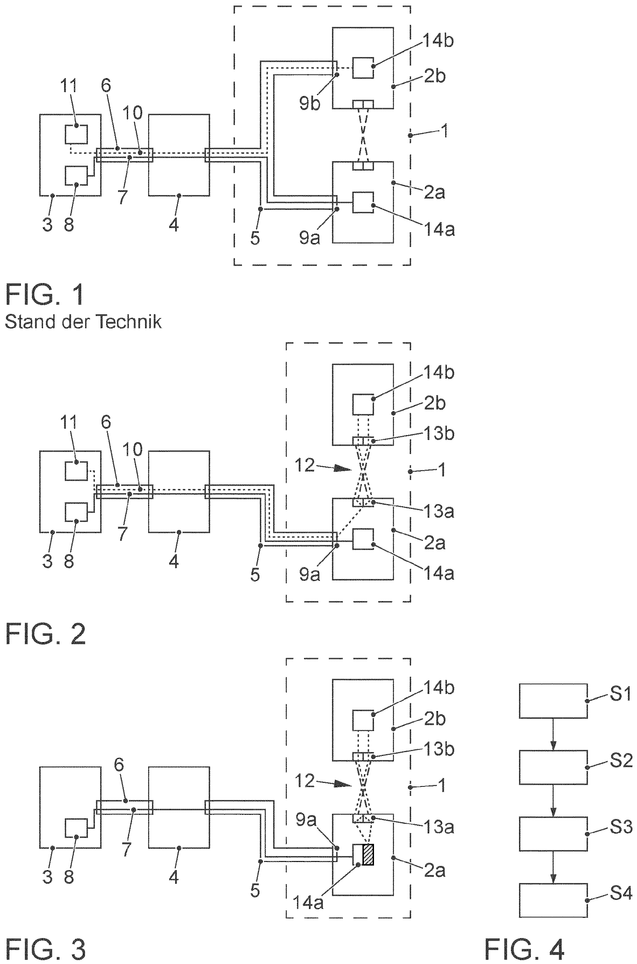

Fig. 1 zeigt ein schematisches Blockschaltbild eines Systems 1 mit zwei Funktionseinheiten 2a, 2b, nämlich einer ersten Funktionseinheit 2a und einer zweiten Funktionseinheit 2b. Weiter dargestellt ist ein Host-PC 3, der Teil eines übergeordneten Systems sein kann. Dieser Host-PC 3 kann beispielsweise von einem Nutzer bedienbar sein, um Befehle zur Einstellung eines Betriebsverhaltens der Funktionseinheiten 2a, 2b zu erzeugen. Weiter dargestellt ist eine Interface-Einheit 4.

Der Host-PC 3 kann hierbei über eine erste Transportschicht 6, beispielsweise eine USB-basierte Transportschicht oder eine Ethernet-basierte Transportschicht, mit der Interface-Einheit 4 verbunden sein. Die Interface-Einheit kann hierbei über ein als weitere Transportschicht 5 dienendes Bussystem 5, welches beispielsweise ein FlexRay-basiertes oder CAN-basiertes Bussystem ist, mit den Funktionseinheiten 2a, 2b verbunden sein.

Über die Transportschichten 5, 6 können hierbei Signale, insbesondere Befehle und/oder Befehlsantworten, zwischen den hergestellten Einheiten 3, 4, 2a, 2b übertragen werden. Schematisch durch eine durchgezogene Linie dargestellt ist ein erster Kommunikationskanal 7, wobei in einem ersten Einstellvorgang 8 am Host-PC 3 ein Einstellbefehl über diesen ersten Kommunikationskanal 7 an die erste Funktionseinheit 2a übertragen wird. Diese kann den entsprechenden Befehl über eine Kommunikationsschnittstelle 9a der ersten Funktionseinheit 2a empfangen.

Durch eine gepunktete Linie 10 ist schematisch ein weiterer Kommunikationskanal dargestellt, über den Befehle an die zweite Funktionseinheit 2b übertragen werden können, die diese Befehle über eine entsprechende Kommunikationsschnittstelle 9b empfangen kann. Diese Befehle können beispielsweise durch einen weiteren Einstellvorgang 11 am Host-PC 3 erzeugt werden.

Somit ist ersichtlich, dass das Betriebsverhalten der beiden Funktionseinheiten 2a, 2b durch zwei voneinander verschiedene Einstellvorgänge 8, 11 eingestellt wird, nämlich indem entsprechende Einstellbefehle über zwei voneinander verschiedene Kommunikationskanäle übertragen werden, wobei diese Einstellbefehle separat erzeugt werden.

Weiter dargestellt sind eine Steuer- und Auswerteeinrichtung 14a der ersten Funktionseinheit 2a und eine Steuer- und Auswerteeinrichtung 14b der weiteren Funktionseinheit 2b. Durch diese können Befehle interpretiert und ausgeführt werden.

Die Befehle vom Host-PC 3 an die Funktionseinheiten 2a, 2b können insbesondere über das XCP übertragen werden. Hierbei können über den ersten Kommunikationskanal 7 übertragene Befehle als XCP1-Befehle und über den weiteren Kommunikationskanal 10 übertragene Befehle als XCP2-Befehle bezeichnet werden. Durch diese Befehlsübertragung kann dann, insbesondere durch Einstellung von Betriebsparametern der Funktionseinheiten 2a, 2b deren Betriebsverhalten eingestellt werden.

In Fig. 2 ist ein schematisches Blockschaltbild eines erfindungsgemäßen Systems 1 mit zwei Funktionseinheiten 2a, 2b im MCSC-Betriebsmodus dargestellt. Entsprechend der in Fig. 1 dargestellten Ausführungsform sind auch bei der in Fig. 2 dargestellten Ausführungsform der Host-PC 3, die Interface-Einheit 4, die erste Transportschicht 7, die weitere Transportschicht 6 sowie die beiden Kommunikationskanäle 7, 10 dargestellt. Die erste Funktionseinheit 2a bildet hierbei eine Master-Funktionseinheit des Systems 1.

Im Unterschied zu der in Fig. 1 dargestellten Ausführungsform erfolgt die Übertragung von Befehlen an die zweite Funktionseinheit 2b über den zweiten Kommunikationskanal 10 nicht von der Interface-Einheit 4 an die zweite Funktionseinheit 2b über die entsprechende Kommunikationsschnittstelle 9b, sondern über die erste Funktionseinheit 2a und deren Kommunikationsschnittstelle 9a. Diese empfängt über die Kommunikationsschnittstelle 9a der ersten Funktionseinheit 2a über die weitere Transportschicht 5 übertragene Befehle, wobei diese im ersten oder weiteren Kommunikationskanal übertragen sein können.

Weiter wertet die erste Funktionseinheit 2a, insbesondere eine nicht dargestellte Einrichtung zur Auswertung, die übertragenen Befehle aus. Wird detektiert, dass der übertragene Befehl über den zweiten Kommunikationskanal 10 übertragen wurde, so überträgt die erste Funktionseinheit 2a diesen Befehl über ein Funktionseinheit-Kommunikationsnetzwerk 12 an die zweite Funktionseinheit 2b. Das Funktionseinheit-Kommunikationsnetzwerk 12 kann für eine Ende-zu-Ende-Kommunikation zwischen den Funktionseinheiten 2a, 2b ausgebildet sein. Somit kann über das Funktionseinheit-Kommunikationsnetzwerk 12 eine Punkt-zu-Punkt-Verbindung zwischen den beiden Funktionseinheiten 2a, 2b bestehen. Sowohl die erste als auch die zweite Funktionseinheit 2a, 2b umfassen Schnittstellen 13a, 13b zum Anschluss an das Funktionseinheit-Kommunikationsnetzwerk 12.

Im Vergleich mit der in Fig. 1 dargestellten Ausführungsform wird also der Einstellbefehl nicht mehr direkt über die weitere Transportschicht 5 und die Kommunikationsschnittstelle 9b an den zweiten Teilnehmer 2b, sondern über die weitere Transportschicht 5 an den ersten Teilnehmer 2a und von diesem über das Funktionseinheit-Kommunikationsnetzwerk 12 an die zweite Funktionseinheit 2b übertragen.

Das Funktionseinheit-Kommunikationsnetzwerk 12 dient hierbei einer sogenannten Kreuz- oder Querkommunikation, wobei dieses für jeden der beiden Funktionseinheiten 2a, 2b Sende- und Empfangssignale übertragen werden können.

Alternativ zur Auswertung, ob der Befehl über den zweiten Kommunikationskanal 10 übertragen wurde, kann die Master-Funktionseinheit den MCSC-Betriebsmodus auch in Abhängigkeit eines Werts eines Betriebsparameters bestimmen, der in dem über die Kommunikationsschnittstelle 9a empfangenen Befehl kodiert ist.

Durch die Steuer- und Auswerteeinrichtungen 14a, 14b der entsprechenden Funktionseinheiten 2a, 2b können die empfangenen Befehle entsprechend ausgeführt werden.

Fig. 3 zeigt ein schematisches Blockschaltbild eines erfindungsgemäßen Systems 1 mit einer ersten und einer zweiten Funktionseinheit 2a, 2b in einem MCCC-Betriebsmodus. Hierbei ist dargestellt, dass ein Befehl in einem Einstellvorgang 8 erzeugt und im ersten Kommunikationskanal 7 von dem Host-PC 3 über die erste Transportschicht 6, die Interface-Einheit 4 und die weiteren Transportschicht 5 zur ersten Funktionseinheit 2a übertragen wird, die diesen Befehl über die Kommunikationsschnittstelle 9a der ersten Funktionseinheit 2a empfängt. Durch die erste Funktionseinheit 2a wird dieser Befehl ausgewertet, wobei durch die Auswertung der MCCC-Betriebsmodus identifiziert wird. In dem in Fig. 3 dargestellten Ausführungsbeispiel wird durch eine Auswerte- und Steuereinrichtung 14a der ersten Funktionseinheit 2a der Einstellbefehl ausgeführt, wodurch das Betriebsverhalten der ersten Funktionseinheit 2a eingestellt wird. Weiter wird durch die Steuer- und Auswerteeinrichtung 14a, insbesondere durch einen als schraffiert gekennzeichneten Teil der Steuer- und Auswerteeinrichtung 14a, welcher ein Add-On im Vergleich zu der der in Fig. 1 dargestellten Ausführungsform bildet, ein funktionseinheitsspezifischer Einstellbefehl für die zweite Funktionseinheit 2b erzeugt und über das Funktionseinheit-Kommunikationsnetzwerk 12 an diese übertragen. Nach Empfang und Ausführung dieses Einstellbefehls durch die Steuer- und Auswerteeinrichtung 14b ist ebenfalls das Betriebsverhalten der zweiten Funktionseinheit 2b eingestellt.

Kriterien zur Identifizierung des MCCC-Betriebsmodus oder des MCSC-Betriebsmodus wurden vorhergehend bereits erläutert.

Die Funktionseinheiten 2a, 2b können insbesondere redundante Funktionseinheiten 2a, 2b sein. Insbesondere können die beiden Funktionseinheiten 2a, 2b jeweils eine ECU bilden.

Es ist möglich, dass bei der in Fig. 3 dargestellten Ausführungsform die Steuer- und Auswerteeinrichtung 14a der ersten Funktionseinheit 2a zeitverzögert an die zweite Funktionseinheit 2b übertragen wird.

Fig. 4 zeigt ein schematisches Flussdiagramm eines erfindungsgemäßen Verfahrens zur Einstellung eines Betriebsverhaltens mindestens einer Funktionseinheit 2a, 2b (siehe Fig. 3) in einem Fahrzeugkommunikationsnetzwerk.

In einem Übertragungsvorgang S1 wird ein Einstellbefehl an eine Master-Funktionseinheit übertragen, die beispielsweise durch die erste Funktionseinheit 2a (siehe Fig. 3) ausgebildet sein kann.

In einem Auswertevorgang S2 wird dieser Einstellbefehl ausgewertet, wobei durch die Auswertung ein MCCC-Betriebsmodus oder ein MCSC-Betriebsmodus bestimmt wird. Beispielsweise kann hierfür der Kanal der entsprechenden Befehlsübertragung ausgewertet werden. Weitere alternative Identifikationsmöglichkeiten wurden vorhergehend bereits erläutert.

In einem Aktivierungsvorgang S3 wird dann der identifizierte Betriebsmodus, also der MCCC-Betriebsmodus oder MCSC-Betriebsmodus, aktiviert. In einem Einstellvorgang S4 wird dann entsprechend des identifizierten Betriebsmodus das Betriebsverhalten von genau einer Funktionseinheit 2a, 2b oder das Betriebsverhalten von mindestens zwei Funktionseinheiten eingestellt. Der Einstellvorgang wurde vorhergehend bereits näher erläutert.

### Bezugszeichenliste

- 1: System
- 2a: erste Funktionseinheit, Master-Funktionseinheit
- 2b: zweite Funktionseinheit
- 3: Host-PC
- 4: Interface-Einheit
- 5: Bussystem
- 6: erste Transportschicht
- 7: erster Kommunikationskanal
- 8: erster Einstellvorgang
- 9a: Kommunikationsschnittstelle der ersten Funktionseinheit
- 9b: Kommunikationsschnittstelle der zweiten Funktionseinheit
- 10: zweiter Kommunikationskanal
- 11: zweiter Einstellvorgang
- 12: Funktionseinheit-Kommunikationsnetzwerk
- 13a: Schnittstelle
- 13b: Schnittstelle
- 14a: Steuer- und Auswerteeinrichtung der ersten Funktionseinheit
- 14b: Steuer- und Auswerteeinrichtung der zweiten Funktionseinheit
- S1: Übertragungsvorgang
- S2: Auswertevorgang
- S3: Identifizierungsvorgang
- S4: Einstellvorgang

## Patentansprüche

1. Verfahren zur Einstellung eines Betriebsverhaltens mindestens einer Funktionseinheit (2a, 2b) in einem Fahrzeugkommunikationsnetzwerk, welches mindestens zwei Funktionseinheiten (2a, 2b) umfasst, wobei mindestens ein Einstellbefehl an eine Master-Funktionseinheit (2a) übertragen wird, wobei durch die Master-Funktionseinheit (2a) mindestens der Einstellbefehl ausgewertet wird, wobei durch die Auswertung ein MCCC (Multi Channel Common Calibration)-Betriebsmodus oder ein MCSC (Multi Channel Single Calibration)-Betriebsmodus bestimmt wird, wobei in dem MCSC-Betriebsmodus durch die Master-Funktionseinheit (2a) das Betriebsverhalten von genau einer Funktionseinheit (2a, 2b) und in dem MCCC-Betriebsmodus durch die Master-Funktionseinheit das Betriebsverhalten von mindestens zwei Funktionseinheiten (2a, 2b) eingestellt wird, **dadurch gekennzeichnet, dass** das Einstellen des Betriebsverhaltens durch Einstellung mindestens eines Betriebsparameters erfolgt, wobei der Betriebsparameter durch Schreiben eines im Einstellbefehl kodierten Werts an eine vorbestimmte Speicherstelle erfolgt.

2. Verfahren nach Anspruch 1, **dadurch gekennzeichnet, dass** die Funktionseinheiten (2a, 2b) redundante Funktionseinheiten sind.

3. Verfahren nach einem der vorangegangenen Ansprüche, **dadurch gekennzeichnet, dass** das Betriebsverhalten der Master-Funktionseinheit (2a) in Abhängigkeit des Einstellbefehls eingestellt wird, wenn diese als einzustellende Funktionseinheit (2a) bestimmt wurde, und/oder durch die Master-Funktionseinheit (2a) ein funktionseinheitsspezifischer Einstellbefehl an alle einzustellenden Funktionseinheiten übertragen wird.

4. Verfahren einem der vorangegangenen Ansprüche, **dadurch gekennzeichnet, dass** im Einstellbefehl mindestens ein Wert mindestens eines Betriebsparameters kodiert ist, wobei in Abhängigkeit des Werts dieses Betriebsparameters der MCCC-Betriebsmodus oder der MCSC-Betriebsmodus identifiziert wird und/oder dass im Einstellbefehl mindestens ein Speicherbereich für einen Wert kodiert ist, wobei in Abhängigkeit des Speicherbereichs der MCCC-Betriebsmodus oder der MCSM-Betriebsmodus identifiziert wird und/oder dass der MCCC-Betriebsmodus oder der MCSC-Betriebsmodus in Abhängigkeit eines Kommunikationskanals identifiziert wird, über den der Einstellbefehl übertragen wird.

5. Verfahren nach einem der vorangegangenen Ansprüche, **dadurch gekennzeichnet, dass** durch die Master-Funktionseinheit (2a) zusätzlich zum Einstellbefehl auch weitere an die Master-Funktionseinheit (2a) übertragene Befehle ausgewertet werden, wobei durch die Auswertung die einzustellende Funktionseinheit oder die einzustellenden Funktionseinheit (2a) bestimmt wird/werden, deren Betriebsverhalten einzustellen ist.

6. Verfahren nach einem der vorangegangenen Ansprüche, **dadurch gekennzeichnet, dass** durch die Master-Funktionseinheit (2a) ein funktionseinheitsspezifischer Einstellbefehl an alle einzustellenden Funktionseinheiten (2a, 2b) übertragen wird, wobei die Ausführung des Einstellbefehls in der Master-Funktionseinheit (2a) zeitverzögert zur Übertragung erfolgt.

7. Verfahren nach einem der vorangegangenen Ansprüche, **dadurch gekennzeichnet, dass** das eingestellte Betriebsverhalten von mindestens zwei Funktionseinheiten (2a, 2b) mit gleich eingestelltem Betriebsverhalten verglichen wird, wobei eine Fehleinstellung detektiert wird, falls die eingestellten Betriebsverhalten voneinander abweichen.

8. Verfahren nach Anspruch 7, **dadurch gekennzeichnet, dass** bei Detektion einer Fehleinstellung durch die Master-Funktionseinheit ein funktionseinheitsspezifischer Einstellbefehl an die mindestens eine weitere Funktionseinheit übertragen wird.

9. Vorrichtung zur Einstellung eines Betriebsverhaltens mindestens einer Funktionseinheit (2a, 2b) in einem Fahrzeugkommunikationsnetzwerk, welches mindestens zwei Funktionseinheiten (2a, 2b) umfasst, wobei die Vorrichtung mindestens eine erste Kommunikationsschnittstelle (9a) zum Empfang eines Einstellbefehls umfasst, wobei die Vorrichtung mindestens eine Einrichtung (14a) zur Auswertung des mindestens einen Einstellbefehls umfasst, wobei durch die Auswertung ein MCCC (Multi Channel Common Calibration)-Betriebsmodus oder ein MCSC (Multi Channel Single Calibration)-Betriebsmodus bestimmt wird, wobei in dem MCSC-Betriebsmodus durch die Vorrichtung das Betriebsverhalten von genau einer Funktionseinheit (2a, 2b) und in dem MCCC-Betriebsmodus durch die Vorrichtung das Betriebsverhalten von mindestens zwei Funktionseinheiten (2a, 2b) eingestellt wird, **dadurch gekennzeichnet, dass** das Einstellen des Betriebsverhaltens durch Einstellung mindestens eines Betriebsparameters erfolgt, wobei der Betriebsparameter durch Schreiben eines im Einstellbefehl kodierten Werts an eine vorbestimmte Speicherstelle erfolgt.

## Claims

1. Method for adjusting an operating behaviour of at least one functional unit (2a, 2b) in a vehicle communication network that comprises at least two functional units (2a, 2b), wherein at least one adjusting command is transmitted to a master functional unit (2a), the master functional unit (2a) evaluating at least the adjusting command, the evaluation being used to determine an MCCC (Multi Channel Common Calibration) operating mode or an MCSC (Multi Channel Single Calibration) operating mode, wherein the master functional unit (2a) adjusts the operating behaviour of precisely one functional unit (2a, 2b) in the MCSC operating mode and the master functional unit adjusts the operating behaviour of at least two functional units (2a, 2b) in the MCCC operating mode, **characterized in that**
the operating behaviour is adjusted by adjusting at least one operating parameter, the operating parameter being provided by writing a value encoded in the adjusting command to a predetermined memory location.

2. Method according to Claim 1, **characterized in that** the functional units (2a, 2b) are redundant functional units.

3. Method according to either of the preceding claims, **characterized in that** the operating behaviour of the master functional unit (2a) is adjusted on the basis of the adjusting command if said unit has been determined as the functional unit (2a) to be adjusted, and/or the master functional unit (2a) transmits a functional-unit-specific adjusting command to all functional units to be adjusted.

4. Method according to one of the preceding claims, **characterized in that** at least one value of at least one operating parameter is encoded in the adjusting command, the value of this operating parameter being taken as a basis for identifying the MCCC operating mode or the MCSC operating mode, and/or **in that** at least one memory area for a value is encoded in the adjusting command, the memory area being taken as a basis for identifying the MCCC operating mode or the MCSM operating mode, and/or in that the MCCC operating mode or the MCSC operating mode is identified on the basis of a communication channel via which the adjusting command is transmitted.

5. Method according to one of the preceding claims, **characterized in that**, in addition to the adjusting command, the master functional unit (2a) also evaluates other commands transmitted to the master functional unit (2a), the evaluation being used to determine the functional unit to be adjusted or the functional units (2a) to be adjusted whose operating behaviour is to be adjusted.

6. Method according to one of the preceding claims, **characterized in that** the master functional unit (2a) transmits a functional-unit-specific adjusting command to all functional units (2a, 2b) to be adjusted, the adjusting command being executed in the master functional unit (2a) with a delay in respect of the transmission.

7. Method according to one of the preceding claims, **characterized in that** the adjusted operating behaviour of at least two functional units (2a, 2b) having identically adjusted operating behaviour is compared, a misadjustment being detected if the adjusted operating behaviours differ from one another.

8. Method according to Claim 7, **characterized in that** detection of a misadjustment by the master functional unit results in a functional-unit-specific adjusting command being transmitted to the at least one other functional unit.

9. Apparatus for adjusting an operating behaviour of at least one functional unit (2a, 2b) in a vehicle communication network that comprises at least two functional units (2a, 2b), wherein the apparatus comprises at least one first communication interface (9a) for receiving an adjusting command, wherein the apparatus comprises at least one device (14a) for evaluating the at least one adjusting command, the evaluation being used to determine an MCCC (Multi Channel Common Calibration) operating mode or an MCSC (Multi Channel Single Calibration) operating mode, wherein the apparatus adjusts the operating behaviour of precisely one functional unit (2a, 2b) in the MCSC operating mode and the apparatus adjusts the operating behaviour of at least two functional units (2a, 2b) in the MCCC operating mode, **characterized in that**
the operating behaviour is adjusted by adjusting at least one operating parameter, the operating parameter being provided by writing a value encoded in the adjusting command to a predetermined memory location.

## Revendications

1. Procédé de réglage d'un comportement en fonctionnement d'au moins une unité fonctionnelle (2a, 2b) dans un réseau de communication de véhicule qui comprend au moins deux unités fonctionnelles (2a, 2b), au moins une instruction de réglage étant transmise à une unité fonctionnelle maître (2a), au moins l'instruction de réglage étant évaluée par l'unité fonctionnelle maître (2a), l'évaluation déterminant un mode de fonctionnement MCCC (Multi Channel Common Calibration) ou un mode de fonctionnement MCSC (Multi Channel Single Calibration), le comportement en fonctionnement d'exactement une unité fonctionnelle (2a, 2b) étant réglé, dans le mode de fonctionnement MCSC, par l'unité fonctionnelle maître (2a) et le comportement en fonctionnement d'au moins deux unités fonctionnelles (2a, 2b) étant réglé, dans le mode de fonctionnement MCCC, par l'unité fonctionnelle maître, **caractérisé en ce que** le comportement en fonctionnement est réglé par réglage d'au moins un paramètre de fonctionnement, le paramètre de fonctionnement résultant de l'écriture d'une valeur, codée dans l'instruction de réglage, à un emplacement en mémoire prédéterminé.

2. Procédé selon la revendication 1, **caractérisé en ce que** les unités fonctionnelles (2a, 2b) sont des unités fonctionnelles redondantes.

3. Procédé selon l'une des revendications précédentes, **caractérisé en ce que** le comportement en fonctionnement de l'unité fonctionnelle maître (2a) est réglé en fonction de l'instruction de réglage, si l'unité a été déterminée comme unité fonctionnelle (2a) à régler, et/ou une instruction de réglage spécifique à l'unité fonctionnelle est transmise par l'unité fonctionnelle maître (2a) à toutes les unités fonctionnelles à régler.

4. Procédé selon l'une des revendications précédentes, **caractérisé en ce qu'**au moins une valeur d'au moins un paramètre de fonctionnement est codée dans l'instruction de réglage, le mode de fonctionnement MCCC ou le mode de fonctionnement MCSC étant identifié en fonction de la valeur de ce paramètre de fonctionnement, et/ou **en ce qu'**au moins une zone mémoire est codée pour une valeur dans l'instruction de réglage, le mode de fonctionnement MCCC ou le mode de fonctionnement MCSM étant identifié en fonction de la zone mémoire et/ou le mode de fonctionnement MCCC ou le mode de fonctionnement MCSC étant identifié en fonction d'un canal de communication sur lequel l'instruction de réglage est transmise.

5. Procédé selon l'une des revendications précédentes, **caractérisé en ce que** l'unité fonctionnelle maître (2a) évalue également d'autres instructions transmises à l'unité fonctionnelle maître (2a) en plus de l'instruction de réglage, l'évaluation déterminant l'unité fonctionnelle ou l'unité fonctionnelle (2a) à régler dont le comportement en fonctionnement doit être réglé.

6. Procédé selon l'une des revendications précédentes, **caractérisé en ce qu'**une instruction de réglage spécifique à l'unité fonctionnelle est transmise par l'unité fonctionnelle maître (2a) à toutes les unités fonctionnelles (2a, 2b) à régler, l'exécution de l'instruction de réglage dans l'unité fonctionnelle maître (2a) étant effectuée avec un retard par rapport à la transmission.

7. Procédé selon l'une des revendications précédentes, **caractérisé en ce que** le comportement en fonctionnement réglé d'au moins deux unités fonctionnelles (2a, 2b) est comparé à un comportement en fonctionnement réglé de manière identique, un réglage incorrect étant détecté si les comportements en fonctionnement réglés diffèrent les uns des autres.

8. Procédé selon la revendication 7, **caractérisé en ce que**, lorsqu'un réglage incorrect est détecté par l'unité fonctionnelle maître, une instruction de réglage spécifique à l'unité fonctionnelle est transmise à l'au moins une autre unité fonctionnelle.

9. Dispositif de réglage d'un comportement en fonctionnement d'au moins une unité fonctionnelle (2a, 2b) dans un réseau de communication de véhicule qui comprend au moins deux unités fonctionnelles (2a, 2b), le dispositif comprenant au moins une première interface de communication (9a) destinée à recevoir une instruction de réglage, le dispositif comprenant au moins un module (14a) destiné à évaluer l'au moins une instruction de réglage, l'évaluation déterminant un mode de fonctionnement MCCC (Multi Channel Common Calibration) ou un mode de fonctionnement MCSC (Multi Channel Single Calibration), le comportement en fonctionnement d'exactement une unité fonctionnelle (2a, 2b) étant réglé, dans le mode de fonctionnement MCSC, par le dispositif et le comportement en fonctionnement d'au moins deux unités fonctionnelles (2a, 2b) étant réglé, dans le mode de fonctionnement MCCC, par le dispositif, **caractérisé en ce que** le réglage du comportement en fonctionnement est effectué par réglage d'au moins un paramètre de fonctionnement, le paramètre de fonctionnement résultant de l'écriture d'une valeur, codée dans l'instruction de réglage, à un emplacement en mémoire prédéterminé.
